# EUROPEAN PATENT APPLICATION

(11) **EP 0 963 969 A1**
(43) Date of publication of application: **15.12.1999**
(21) Application number: 97903390.9
(22) Date of filing: 05.02.1997
(51) Int. Cl.: C05F 3/00, C05F 3/06, C05F 17/00, C05F 17/02

(54) **PROCESS FOR THE TOTAL REMOVAL OF PURINES, PLANT FOR IMPLEMENTING SUCH PROCESS AND NATURAL FERTILIZER OBTAINED**

(71) Applicant: SLIR, S.L., E-31003 Pamplona (ES)
(72) Inventor: ARANAZ BEROIZ, Jesus, E-31004 Pamplona (ES)
(74) Representative: Carpintero Lopez, Francisco
(86) International application number: ES9700025
(87) International publication number: WO9834889

(57) **Abstract**

The procedure consists of mixing purines with cow dung, chicken pellets and sawdust or an equivalent vegetal absorbent material, homogenising the mixture in a vat with a stirring mechanism, to deposit the mixture obtained or biomass in piles from where it is removed, turned over and aerated for about 11 days, moving the piles towards the edge for collection to then deposit the product in beds for maturation or to send them to a parallel installation for grinding, drying, maturing and pelletising the product. The product obtained is a natural fertiliser which can be used directly as a fertiliser or as a raw material in other industrial processes.

## Description

### OBJECT OF THE INVENTION

The present invention relates to a procedure for the treatment of purines which allows their complete elimination, and as a consequence, the sanitary problems, smells, etc., derived from their storage, obtaining as a final product a natural fertiliser appropriate for cultivation or garden which can also be used as raw material for obtaining organominerals or substrates.

### BACKGROUND OF THE INVENTION

Currently, in countries that have a large population of pigs, there is the important problem of treating the purines generated. This problems lies basically in the large quantity of purines produced by each pig per day (approximately 10 litres) and in the elevated toxicity that is produced by their application, with no prior treatment, to the earth

This a major problem in the areas in which pig farms are found as, in order to maintain their profitability, they have to concentrate as many pigs as possible on the farm, pigs which produce such large quantities of purines per day that they are difficult to eliminate.

A problem similar to that of pig purine also occurs for poultry purines and those of cows, and so hereinafter, we will refer to purines in generic form, these can be of the pig, cow or poultry variety as the procedure that is proposed is applicable to all these types.

To solve the problem described above there are several procedures or machines that carry out the treatment of the aforementioned purines. In this sense the Spanish patents nos. 8201937, 8801909, as well as European patent no. 0445102, the German patent no 3246526, the French patents nos. 2673070 and 2260550, as well as the US patent no. 4193786 can be cited. All of these make reference to procedures, installations or machinery at a farm level and never to installations or procedures for industrial application. On the other hand, these installations or procedures, in their majority, simply eliminate or transform the toxic or poisonous components present in the purines, obtaining as a final product, in the best of cases, something which is not toxic but which has little use as a fertiliser.

The applicant himself, in the Spanish patent no. 9102526, describes a system for the elimination and recycling of residues for the manufacture of organic fertiliser, based on mixing purines with an absorbent product such as sawdust, straw, peat, or animal excrement, using for the treatment an installation with two homogenisation vats connected via to fermentation belts, all in combination with a tipping skip along them to crush and tip the biomass obtained. In this invention an installation of industrial nature is described, but does not have very high productivity levels, needing at least 30 days to obtain the final product which might be a fertiliser or in many cases simply an organic product.

This being the case, we can say that, currently, there is no known procedure or industrial installation with sufficiently good performance that it allows the systematic collection of the purines generated in a geographic zone with a high pig, cow or poultry density and that carries out a subsequent treatment and that eliminate completely the purines, obtaining as a result a completely harmless product that can then be used as a fertiliser.

### DESCRIPTION OF THE INVENTION

The present invention completely resolves the previously described problems, by means of a purine elimination process that allows their systematic collection from an extensive geographic zone, obtaining, after their treatment, a product free of toxic components and which also shows characteristics of natural fertiliser which can be sold or used directly, to condition ground, to cover recently sowed plants in the garden, etc. The natural fertiliser obtained can also be used as a raw material in other processes. For example, if mineral elements are added (NPK) an organomineral is obtained of the desired characteristics and if peat or silicon sand is added a substrate is obtained which can be used in nurseries and in the garden.

More exactly, the procedure of the invention consists in mixing the purines to be treated with cow dung, chicken droppings and a vegetal absorbing agent such as sawdust or straw and their subsequent treatment in two phases. The first phase is a mixing phase and homogenisation phase and the second phase is one of turning over and moving and gradual transport, during which the fermentation takes place.

In this procedure the addition of excrement is not carried out optionally as an purine humidity absorbing element, but rather their addition is in large quantities, acting as an oxidant at the same time as being organic material which contributes fertilising properties to the product obtained. After many laboratory trials, it has been possible to determine the quantities needed of each of the raw materials to contain a final product completely free of pathological germs which can be described as a natural fertiliser whose specific characteristics will be described later.

The procedure of the invention starts with the arrival and storage of the raw materials, placing the purines in vats with permanent stirring, while the sawdust and the excrement are stored directly in piles open to the air with lixiviate Control.

The treatment of the purines starts by mixing the purines, excrement and sawdust in a homogenisation vessel, equipped for stirring, at a proportion of 30 to 60 % purines, 10 to 30 % cow dung, 5 to 10 % chicken droppings and 15 to 40 % sawdust. The percentage for chicken droppings can be substituted by cow dung. In the homogenisation vessel, the mixture is also seeded with some bacterial strains. The percentages of each raw material used can vary within the ranges mentioned above, depending on the humidity level of the raw materials. This is because the fertilising power is only found in the solid material and not in the water, and we should, therefore, adjust the quantities needed for each in order to arrive at a natural fertiliser with the desired characteristics.

Next, the biomass or mixture obtained in the homogenisation vessel is tipped onto the base in piles that aid the fermentation of this biomass. The homogenisation vessel can be moved on rails on a platform parallel to the milling unit allowing the contents of the vessel to be tipped in several longitudinal rows or lanes.

These piles of biomass should have enough consistency to avoid a self-flattening of the deposited biomass thus helping the fermentation of their inner regions. The optimal dimensions of these piles are such that the biomass forms a trapezium with a longest side of 3.5 - 4.5 m, a width of 2 - 3 m and a height of between 1.5 and 2.5 m. The height can vary as a function of the humidity, with a greater height corresponding to a more humid biomass.

To reduce the fermentation time needed to produce the three phases of biomass maturity, mesophile, thermophile, and stabilisation, the use of a tipping skip has been anticipated which moves around the piled material from the different rows or lanes daily, thus attaining an optimal aeration of the product. This is so because 24 hours are needed in order that, after each movement of the biomass, its internal temperature spontaneously increases once again, thus continuing the aerobic fermentation.

The tipping skip is operated by a sliding crane that can be moved longitudinally and transversally around the base to agitate the piled product from each one of the rows or lanes. The tipping takes place from the furthestmost point of the base towards the discharge zone, displacing the product towards the furthermost extreme of the files, in such a way that after 11 days of aerobic fermentation the product moves from the discharge to a point at the edge of the base where it can easily be collected, to be ground up, granulated, made into pellets, put into sacks and stored in a silo.

And so, by piling the product up in the aforementioned rows or lanes and by daily tipping an aerobic fermentation is achieved in only 11 days, while with the current systems the composting time is approximately 5 to 6 months.

After 11 days of maturation of the product in the piles, a natural fertiliser is obtained, which has a high microbial lifetime and which continues to ferment, therefore raising the teamperature and the C/N ratio which should be reduced if the product is to used as a fertiliser. To do so, the product is now stabilised, and it is transferred to some maturation beds where it is spread out, until the fermentation is complete.

The proposed procedure allows the final production of a natural fertiliser with the following characteristics:
2 units of N₂ fertiliser, 2 units of P₂O₅ fertiliser and 2 units of K₂O fertiliser (total of 6 fertiliser units).
   - Humidity of 30-35% (preferably 34%)
   - 80-85% organic material
   - pH = 7.5-8.5
   - C/N ratio = 14 (always less than 20).

### DESCRIPTION OF THE DRAWINGS

To complete the description which is being made and with the aim of helping understand the characteristics of the invention, the present descriptive memorandum is accompanied, as an integral part thereof, by a single sheet of drawings, in which in an illustrative and non-limiting way, a plan has been drawn up for setting up an installation, object of the invention, for the elimination of purines.

### PREFERABLE EMBODIMENT OF THE INVENTION

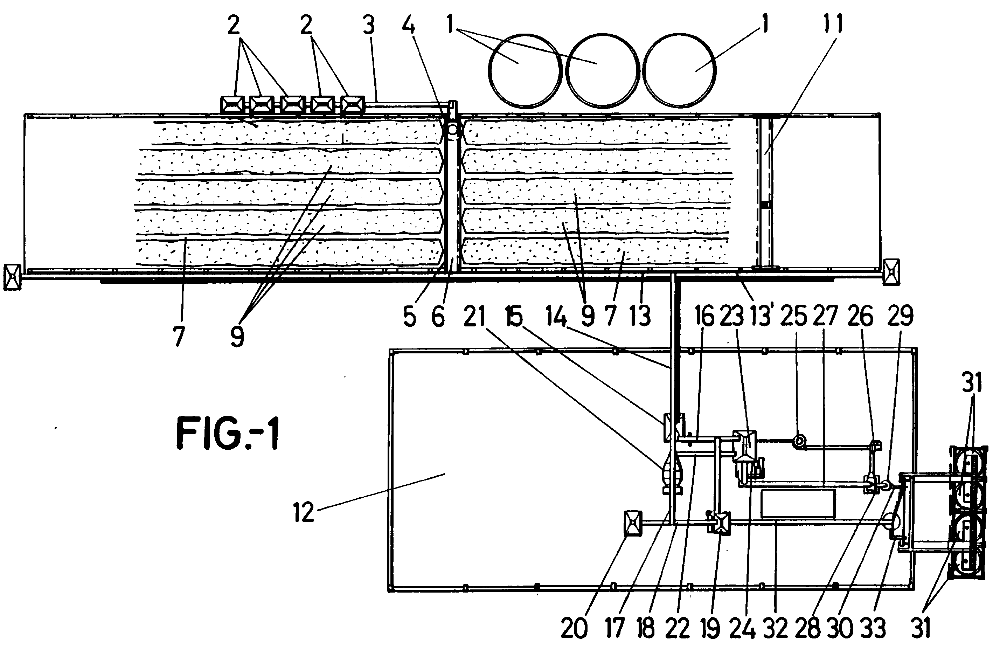

As can be seen in the figure, the installation comprises in the first instance a series of vats or silos (1) for storage of purines, as well as a series of hoppers (2) in which the storage and administration of the products to be mixed with the purines is carried out. These are, cow dung and chicken droppings and vegetal absorbing agents such as sawdust. All the administration hoppers (2) have in common an input belt (3), which transport these products to the homogenisation vat (4), equipped with a stirring device. This stirring can be carried out be means independent to the vat such as stirrers, or by the vat itself, which could be rotated, thus producing the required stirring. This homogenisation vat (4) is mounted in such a way that it can be moved along rails (5) on a transversal platform (6) with respect to a concrete base (7), onto which the mixture or biomass obtained is discharged in the form of piles which will form rows or lanes (9) longitudinal to the base (7). Also anticipated is a transversal crane (11) which can move a tipping skip which breaks up and tips the biomass along the different rows or lanes (9). Logically, the entire installation will be covered (7) to prevent exposure of the piles of biomass to the rain which would prolong the dehydration step.

Each pile of biomass, corresponding to a homogenisation vat load (4), will have the form of a trapezium with a longest side between 3.5 and 4.5 m, a width of between 2 and 3 m and a height of between 1.5 and 2.5 m. The height can vary depending on the humidity, with a larger height corresponding to a more humid biomass. The different vat loads or biomass piles will be deployed in rows or cells on the base.

The number of files, their length and the speed of the tipping skip, are such that all the biomass can be tipped daily. The speed at which the tipping is carried out can be varied if there is a change in the volume of biomass (number of rows used) or the number of working hours anticipated for the installation.

And so, the vat (4) will deposit the homogenised mixture or biomass in each of the files or lanes (9), the biomass being progressively displaced towards the opposite extreme of the discharge with the help of movers equipped with a sliding crane (11), in such a way that the time taken to cover the base (7) is equivalent to the fermentation time or the conversion of the biomass into the required natural fertiliser.

In accordance with the described installation, the purines are stored in the tanks (1) equipped with permanent stirring, while the sawdust, cow dung and chicken droppings are stored in administration hoppers (2), effecting a pumping of the purines towards the vat (4) and, a transportation means, by a corresponding belt (3), for the rest of the raw materials to the homogenisation vat (4), which is seeded in due time with a bacterium previously cultivated in the laboratory.

After many studies and laboratory trials the quantities necessary for each of the integral raw materials have been determined. They are as follows:
30 to 60% of purines
   - 10 to 30% of cow dung
   - 5 to 10% of chicken droppings
   - 15 to 40% sawdust

Depending on the availability of the dungs in the geographical zone corresponding to the installation, cow dung or chicken droppings can be substituted by horse manure or bird droppings. If no type of bird droppings are available cow dung will be used alone, increasing their proportion in the mixture.

Once the mixture has been homogenised in the vat (4) the product is discharged in piles which form rows or lanes (9) parallel to the base (7).

Then, using a tipping skip, moved by a sliding crane (11), the product is turned upside down daily, in the rows or lanes (9) to prevent the formation of nuclei of anaerobic fermentation, where each inversion brings the pile nearer to the opposite end of the base (7) so that after a period of about 11 days it reaches the unloading belts (13) (13') or grinding and granulating apparatus. During these 11 days, the mesophile and thermophile phases have occurred, and the stabilisation phase is starting, which will be completed in the maturation beds.

With the proposed procedure and in the installation described a natural fertiliser is finally obtained with the following characteristics:
2 fertilising units of N₂, 2 fertilising units of P₂O₅ and 2 fertilising units of K₂O (total of 6 fertilising units)
   - Humidity of 30-35% (preferably 34%)
   - 80-85% organic material
   - pH = 7.5-8.5
   - Ratio C/N = 14 (always less than 20)

Optionally, the installation can be completed with a complimentary bay (12), where the product obtained is taken, after the 11 days of fermentation, for its preparation before selling it and using it. And so, the product obtained goes from the base (7) to the complimentary bay (12), by conveyor belts (13) and (13'), followed by a common belt (14) which takes the product to the mixer (15). Here two independent lines are established (16) and (17), the second of which provides access, via belt (18) to a grinder (19) where the product is ground to a dust. At the beginning of belt (18) there is an unloading hopper (20). Between the mixer (15) and the belt (18), there is a second mixer (21), which has a shoot coming out of it (22), by which the product can get to the hopper (23) and pass through a granulating machine (24). There is a cyclone cooler (25) associated with the corresponding aspirator (26).

The product is taken via a belt (27) from the granulating machine (24), and sent to the output (28), where there is a rotating sieve (29) from which the granulated product goes to a lifter (30) which takes the product in the form of grains to the collection and storage silos (31).

As for the powdered product obtained from the grinder (19), this can be sent by a belt or shoot (32) to the lifter (33) and, from here to the aforementioned silos (31).

The product obtained after the process described can be used directly as a fertiliser, as a ground conditioner, as a cover for newly sown plants in the garden or even for animals. It can also be used as raw material in other processes and also for example mineral elements (NPK) can be added to give an organomineral of the desired characteristics. If peat or silicon sand is added a substrate is obtained for use in nurseries or in the garden.

It is not considered necessary to make this description more detailed so that an expert in the matter understands the reach of the invention and the advantages that are derived from it.

The materials, their form, size and deployment of the elements will be susceptible to variation provided that this does not constitute a change to the essence of the invention.

The terms in which this memorandum has been written should always be taken in their broadest sense and are not limiting.

## Claims

1. Process for the complete elimination of purines, essentially characterised because it consists of mixing purines with cow dung, chicken droppings and sawdust or equivalent vegetal absorbent material, in the proportions 10-30% cow dung, 5-10% chicken droppings, 30-60% purines and 15-40% sawdust, where the percentage of chicken droppings can be substituted completely by the cow dung, homogenising the mixture in a vat which is seeded with a bacterium, which once homogenised is deposited, forming biomass piles, on a base where it remains for 10 to 12 days, during which it is moved, turned over and aired once a day and at the same time moved towards the edge for removal, all this in such a way that during the time the biomass takes to reach the edge the fermentation and conversion of the initial raw materials into natural fertiliser is complete, with high microbial life, which can be put on beds until maturation is complete, or they can be taken to a parallel installation to be ground, dried, granulated and/or pelletised.

2. Installation to put into practice the process of claim 1, characterised in that it includes a homogenisation vat (4), equipped with a means for stirring, into which the purines from the silo or storage containers are introduced (1) and the cow dung, chicken droppings and sawdust from the administration hoppers (2), the said vat (4) being mounted is such a way that it can be moved along rails (5) on a platform (6) transverse to the base (7) in such a way that the homogenisation vat (4) can deposit the biomass on the base forming piles, making a movement and turning the deposited biomass, with the collaboration of mover equipment which move longitudinally along the base, in such a way that biomass moves towards the area of collection, forming longitudinal rows or lanes, with the journey and turning-over timed so that the biomass reaches the edge for collection after 10-12 days.

3. Installation, according to claim 2, characterised essentially in that the piles of product or biomass formed from the mixture produced in the vat form approximately a trapezium whose longest side is 3-5 - 4.5 m and 2 - 3 m wide and a height of between 1.5 and 2.5 m.

4. Natural fertiliser obtained by means of the procedure of claim 1, by mixing, homogenising and fermenting the purines, cow dung, chicken droppings and sawdust, to give a completely harmless product, with at least six fertiliser units distributed, according to the raw materials between N₂, P₂O₅ and K₂O, a humidity of 30-35%, a percentage of organic material of 80-85%, a pH = 7.5-8.5 and a ratio C/N = 14.
